# EUROPÄISCHE PATENTSCHRIFT

(11) **EP 1 037 759 B1**
(45) Veröffentlichungstag und Bekanntmachung des Hinweises auf die Patenterteilung: **07.05.2003**
(21) Anmeldenummer: 99939915.7
(22) Anmeldetag: 19.06.1999
(51) Int. Cl.: B60K 15/00

(54) **VORRICHTUNG ZUM FÖRDERN VON KRAFTSTOFF AUS EINEM VORRATSBEHÄLTER ZUR BRENNKRAFTMASCHINE EINES KRAFTFAHRZEUGS**
DEVICE FOR DELIVERING FUEL FROM A STORAGE TANK TO THE INTERNAL COMBUSTION ENGINE OF A MOTOR VEHICLE
DISPOSITIF POUR REFOULER DU CARBURANT DEPUIS UN RESERVOIR JUSQU'AU MOTEUR A COMBUSTION INTERNE D'UN VEHICULE AUTOMOBILE

(30) Priorität: 23.07.1998 DE 19833130
(43) Veröffentlichungstag der Anmeldung: 27.09.2000
(73) Patentinhaber: ROBERT BOSCH GMBH, 70442 Stuttgart (DE)
(72) Erfinder: FRANK, Kurt, D-73614 Schorndorf (DE)
(86) Internationale Anmeldenummer: DE9901804
(87) Internationale Veröffentlichungsnummer: WO00005089

(56) Entgegenhaltungen:
- DE-A- 3 500 718
- DE-A- 4 123 367

## Beschreibung

### Stand der Technik

Die Erfindung betrifft eine Vorrichtung zum Fördern von Kraftstoff aus einem Vorratsbehälter zur Brennkraftmaschine eines Kraftfahrzeugs nach dem Oberbegriff des Anspruchs 1. Bei derartigen bekannten Vorrichtungen besteht die Problematik, daß es insbesondere bei Kurvenfahrten und gleichzeitig relativ leerem Kraftstofftank dazu kommt, daß sich der Kraftstoff in einem Randbereich des Kraftstofftanks ansammelt. Dadurch befindet sich im Bereich der Öffnung, durch die die Strahlpumpe den Kraftstoff aus dem Kraftstofftank ansaugt, kein Kraftstoff mehr. Infolge dessen kann Kraftstoff aus dem Staubehälter über das Mischrohr durch die Öffnung in den Kraftstofftank ausströmen, wodurch der Kraftstoffpegel im Staubehälter derart abnehmen kann, daß nicht mehr gewährleistet ist, daß die Kraftstoffpumpe mit genügend Kraftstoff aus dem Staubehälter versorgt wird.

### Vorteile der Erfindung

Die erfindungsgemäße Vorrichtung zum Fördern von Kraftstoff aus einem Vorratsbehälter zur Brennkraftmaschine eines Kraftfahrzeugs mit den kennzeichnenden Merkmalen des Anspruchs 1 hat demgegenüber den Vorteil, daß ein Rückfluß von Kraftstoff aus dem Staubehälter in den Kraftstofftank verhindert wird. Dadurch ist gewährleistet, daß sich stets genügend Kraftstoff im Staubehälter befindet, so daß die Kraftstoffpumpe immer mit Kraftstoff versorgt ist.

Weitere Vorteile und vorteilhafte Weiterbildungen der erfindungsgemäßen Vorrichtung zum Fördern von Kraftstoff aus einem Vorratsbehälter zur Brennkraftmaschine eines Kraftfahrzeugs ergeben sich aus den Unteransprüchen und der Beschreibung.

### Zeichnung

Ein Ausführungsbeispiel der Erfindung ist in der Zeichnung dargestellt und wird nachfolgend näher erläutert.

Es zeigen:
Figur 1 eine Vorrichtung zum Fördern von Kraftstoff aus einem Vorratsbehälter zur Brennkraftmaschine eines Kraftfahrzeugs in vereinfachter Darstellung,
Figur 2 einen Ausschnitt der Vorrichtung nach Figur 1 in einem Längsschnitt und
Figur 3 einen Schnitt entlang der Linie III-III der Figur 2.

### Beschreibung des Ausführungsbeispiels

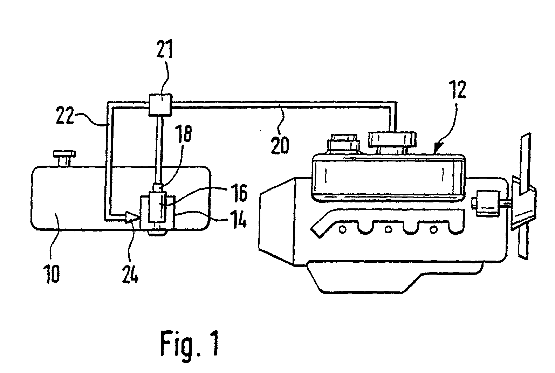

In der Figur 1 ist vereinfacht eine Vorrichtung dargestellt, die zum Fördern von Kraftstoff aus einem Vorratsbehälter 10 zur Brennkraftmaschine 12 eines Kraftfahrzeugs dient. Im Vorratsbehälter 10 ist ein Staubehälter 14 angeordnet, aus dem ein Kraftstofförderaggregat 16 ansaugt, das im Staubehälter 14 angeordnet ist. An einem Druckstutzen 18 des Kraftstofförderaggregats 16 ist eine Druckleitung 20 angeschlossen, die zur Brennkraftmaschine 12 führt. In der Druckleitung 20 ist weiterhin ein Druckregler 21 zwischengeschaltet, der den Druck des geförderten Kraftstoffs in der Druckleitung 20 auf den für die Brennkraftmaschine 12 abgestimmten Systemdruck regelt. Vom Druckregler 21 führt eine Rücklaufleitung 22 zum Vorratsbehälter 10 zurück, durch die von der Brennkraftmaschine 12 nicht benötigter Kraftstoff wieder in den Vorratsbehälter 10 zurückströmt.

Mit der Rücklaufleitung 22 ist eine innerhalb des Vorratsbehälters 10 angeordnete Strahlpumpe 24 verbunden, durch die Kraftstoff in den Staubehälter 14 gefördert wird. Während des Betriebs der Brennkraftmaschine 12 fördert das Kraftstofförderaggregat 16 Kraftstoff aus dem Staubehälter 14 zur Brennkraftmaschine 12, und der durch die Rücklaufleitung 22 zurückströmende Kraftstoff treibt die Strahlpumpe 24 an.

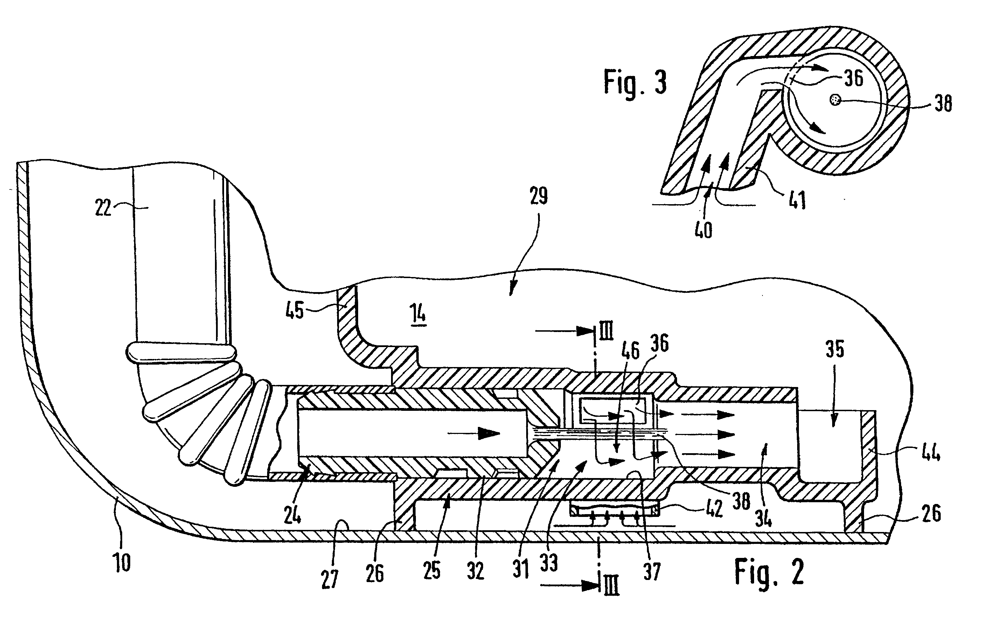

In der Figur 2 ist der Einbau der Strahlpumpe 24 in dem Staubehälter 14 näher dargestellt. Das im Kunststoffspritzverfahren hergestellte Gehäuse 25 des Staubehälters 14 weist zwei Füße 26 auf, auf denen der Staubehälter 14 auf dem Grund 27 des Vorratsbehälters 10 steht. Zwischen dem Innenraum 29 des Staubehälters 14 und dem Vorratsbehälter 10 ist ein Durchgang 31 ausgebildet, der mehrere Abschnitte 32 bis 35 aufweist.

In dem ersten, zylindrisch ausgebildeten Abschnitt 32 ragt das eine Ende der patronenförmig ausgebildeten Strahlpumpe 24 hinein, während über deren anderem Ende die Rücklaufleitung 22 übergeschoben ist. Wesentlich ist auch, daß die Strahlpumpe 24 derart im ersten Abschnitt 32 angeordnet ist, daß keinerlei Kraftstoff aus dem ersten Abschnitt 32 in den Vorratsbehälter 10 strömen kann. An die Strahlpumpe 24 bzw. den ersten Abschnitt 32 schließt sich der ebenfalls zylindrisch ausgebildete zweite Abschnitt 33 an.

Erfindungswesentlich ist die Anordnung und Ausbildung eines im zweiten Abschnitt 33 befindlichen Ansaugfensters 36. Das im Ausführungsbeispiel rechteckig ausgebildete Ansaugfenster 36 ist oberhalb des Grundes 37 des zweiten Abschnitts 33 und oberhalb des mit 38 bezeichneten Treibstrahls der Strahlpumpe 24 angeordnet. Das Ansaugfenster 36 ist Bestandteil eines Ansaugkanals 40, durch den Kraftstoff aus dem Vorratsbehälter 10 in den zweiten Abschnitt 33 strömt. Der Ansaugkanal 40 ist innerhalb eines Ansaugrohres 41 ausgebildet, dessen Ansaugstutzen 42 knapp oberhalb des Grundes 27 des Vorratsbehälters 10 mündet.

In einer bevorzugten Ausführungsform der Erfindung ist das Ansaugrohr 41 zusammen mit dem übrigen Staubehälter 14 in einem einzigen Fertigungsschritt im Spritzgußverfahren aus Kunststoff hergestellt. An den zweiten Abschnitt 33 schließt sich der im Durchmesser gegenüber dem zweiten Abschnitt 33 verkleinerte dritte, ebenfalls zylindrische Abschnitt 34 an, der auch als Mischrohr bezeichnet wird. Der dritte Abschnitt 34 mündet in einem als Sammelraum bezeichneten vierten Abschnitt 35, dessen der Strahlpumpe 24 abgewandte Prallwand 44 gleichzeitig die Außenwand 45 des Staubehälters 14 bildet.

Aus der oben beschriebenen Anordnung und Ausbildung der Abschnitte 32 bis 35 sowie des Ansaugfensters 36 ist ersichtlich, daß von den Abschnitten 32 bis 35 unterhalb des Ansaugfensters 36 ein wannenförmiger Speicherraum 46 ausgebildet wird. Dieser Speicherraum 46 hat zur Folge, daß zum Beispiel bei nicht arbeitender Strahlpumpe 24 und einem Kraftstoffpegel im Vorratsbehälter 10, dessen Niveau sich unterhalb des Ansaugfensters 36 befindet, Kraftstoff aus dem Staubehälter 14 in die Abschnitte 32 bis 35 rückströmt, so daß sich in den Abschnitten 32 bis 35 stets ein Vorrat an Kraftstoff befindet, dessen Niveau auf Höhe des Ansaugfensters 36 ist.

Die oben beschriebene Vorrichtung arbeitet wie folgt:
Im Normalbetrieb des Kraftfahrzeuges, insbesondere bei Geradeausfahrt und/oder relativ vollem Vorratsbehälter 10 ist der Kraftstoffpegel im Vorratsbehälter 10 stets zumindest so hoch, daß sich Kraftstoff im Bereich des Ansaugstutzens 42 des Ansaugkanals 40 befindet. Dadurch wird bei arbeitender Strahlpumpe 24 durch deren Treibstrahl 38 Kraftstoff durch den Ansaugkanal 40 angesaugt, der über das Ansaugfenster 36 in den zweiten Abschnitt 33 eintritt und vom Treibstahl 38 mitgerissen wird. Dieser mitgerissene Kraftstoff vermischt sich mit dem Treibstahl 38 im Bereich des dritten Abschnitts 34, und gelangt unter Druck über den vierten Abschnitt 35 in den Staubehälter 14.

Befindet sich nun zum Beispiel bei Kurvenfahrt und relativ leerem Vorratsbehälter 10 kein Kraftstoff mehr im Bereich des Ansaugstutzens 42, so kann durch den Treibstrahl 38 auch kein Kraftstoff mehr aus dem Vorratsbehälter 10 durch den Ansaugkanal 40 angesaugt werden. Dies hat zur Folge, daß Kraftstoff aus dem Staubehälter 14 den Speicherraum 46 höchstens bis in Höhe des Ansaugfensters 36 auffüllt. Der nunmehr im Speicherraum 46 den Treibstrahl 38 umgebende, aus dem Staubehälter 14 zurückgeströmte Kraftstoff wird jedoch durch den Treibstrahl 38 erfasst und wieder in den Staubehälter 14 zurückbefördert. Dadurch wird verhindert, daß Kraftstoff über das Ansaugfenster 36 in den Ansaugkanal 40 gelangt und in den Vorratsbehälter 10 rückströmt.

Um auch bei vollkommen leerem dritten Abschnitt 34 ein Ansaugen von Kraftstoff über das Ansaugfenster 36 zu bewirken muß die Strahlpumpe 24 als selbstansaugende Pumpe ausgelegt sein. Dies kann dadurch erreicht werden, daß der dritte Abschnitt 34 im Durchmesser so klein und relativ lang ausgebildet ist, daß der Treibstrahl 38 den dritten Abschnitt 34 komplett ausfüllt. Unterstützt wird das Ansaugen durch den kammerförmigen vierten Abschnitt 35, in dem sich der Treibstrahl 38 ansammelt, so daß der Treibstahl 38 bei entsprechendem Niveau in dem vierten Abschnitt 35 auf den dort angesammelten Kraftstoff trifft.

## Patentansprüche

1. Vorrichtung zum Fördern von Kraftstoff aus einem Vorratsbehälter (10) zur Brennkraftmaschine (12) eines Kraftfahrzeugs, mit einem im Vorratsbehälter (10) angeordneten Staubehälter (14), einem aus dem Staubehälter (14) ansaugenden und druckseitig mit der Brennkraftmaschine (12) verbundenen Kraftstofförderaggregat (16), einer Rücklaufleitung (22) von der Brennkraftmaschine (12) zum Vorratsbehälter (10), einer mit der Rücklaufleitung (22) verbundenen, im Vorratsbehälter (10) angeordneten Strahlpumpe (24), durch die Kraftstoff in den Staubehälter (14) gefördert wird, wobei die Strahlpumpe (24) in einem von dem Gehäuse (25) des Staubehälters (14) von mehreren Abschnitten (32 bis 35) ausgebildeten Raum hineinragt, der mit einer Öffnung (36) in einem: einem Grund (37) aufweisenden Abschnitt (33) mit dem Vorratsbehälter (10) verbunden ist, **dadurch gekennzeichnet, daß** die Öffnung (36) auf einem Niveau oberhalb des Grundes (37) des Abschnitts (33) angeordnet ist, so daß oberhalb des Grundes (37) ein Speicherraum (46) für aus dem Staubehälter (14) rückfließenden Kraftstoff ausgebildet ist.

2. Vorrichtung nach Anspruch 1, **dadurch gekennzeichnet, daß** die Öffnung (36) oberhalb des von der Strahlpumpe (24) erzeugten Treibstrahls (38) angeordnet ist.

3. Vorrichtung nach Anspruch 1 oder 2, **dadurch gekennzeichnet, daß** die Öffnung (36) die Austrittsöffnung eines Kanales (40) ist, dessen Eintritt (42) nahe des Bodens (27) des Vorratsbehälters (10) angeordnet ist.

4. Vorrichtung nach Anspruch 3, **dadurch gekennzeichnet, daß** der Kanal (40) Teil des Staubehälters (14) ist.

5. Vorrichtung nach einem der Ansprüche 1 bis 4, **dadurch gekennzeichnet, daß** zumindest der Staubehälter (14) als Kunststoffspritzteil ausgebildet ist.

6. Vorrichtung nach einem der Ansprüche 2 bis 5, **dadurch gekennzeichnet, daß** der Abschnitt (34) eine Querschnittsfläche aufweist, die vom Treibstrahl (38) vollständig ausgefüllt ist.

## Claims

1. Device for delivering fuel from a fuel tank (10) to the internal combustion engine (12) of a motor vehicle, having a storage vessel (14) which is arranged in the fuel tank (10), a fuel feed assembly (16) which sucks in fuel from the storage vessel (14) and is connected at the delivery end to the internal combustion engine (12), a return flow line (22) from the internal combustion engine (12) to the fuel tank (10), a jet pump (24) arranged in the fuel tank (10) by means of which fuel is fed into the storage vessel (14), the jet pump (24) projecting into a space which is formed in the housing (25) of the storage vessel (14) by a plurality of sections (32 to 35) and is connected to an opening (36) in a section (33) which has a base (37) and is connected to the fuel tank (10), **characterized in that** the opening (36) is arranged on a level above the base (37) of the section (33) so that the storage space (46) for fuel which flows back out of the storage vessel (14) is formed above the base (37).

2. Device according to Claim 1, **characterized in that** the opening (36) is arranged above the proportioned jet (38) generated by the jet pump (24).

3. Device according to Claim 1 or 2, **characterized in that** the opening (36) is the outlet opening of a duct (40) whose entry (42) is arranged near to the bottom (27) of the fuel tank (10).

4. Device according to Claim 3, **characterized in that** the duct (40) is part of the storage vessel (14).

5. Device according to one of Claims 1 to 4, **characterized in that** at least the storage vessel (14) is embodied as a plastic injected moulded part.

6. Device according to one of Claims 2 to 5, **characterized in that** the section (34) has a cross-sectional face which is filled completely by the proportion jet (38).

## Revendications

1. Dispositif pour transférer du carburant d'un réservoir (10) vers un moteur à combustion interne (12) d'un véhicule automobile, comprenant
un réservoir intermédiaire (14) placé dans le réservoir (10) (réservoir principal), une unité de transfert de carburant (16) aspirant le carburant du réservoir intermédiaire (14) et dont le côté de refoulement est relié au moteur à combustion interne (12), une conduite au retour (22) reliant le moteur à combustion (12) au réservoir d'alimentation (10),
une pompe à jet (24) installée dans le réservoir (10), reliée à la conduite de retour (22) et qui pour transférer le carburant dans le réservoir intermédiaire (14), pénètre dans un volume formé par le boîtier (25) du réservoir intermédiaire (14) et par plusieurs segments (32-35), ce volume étant relié au réservoir (10) par une ouverture (36) dans un segment (33) ayant un fond (37),
**caractérisé en ce que**
l'ouverture (36) est à un niveau au-dessus du fond (37) du segment (33) de façon à former au-dessus du fond (37), un volume de stockage (46) pour le carburant revenant du réservoir intermédiaire (14).

2. Dispositif selon la revendication 1,
**caractérisé en ce que**
l'ouverture (36) se trouve au-dessus du jet d'entraînement (38) formé par la pompe à jet (24).

3. Dispositif selon la revendication 1 ou 2,
**caractérisé en ce que**
l'ouverture (36) est l'orifice de sortie d'un canal (40) dont l'entrée (42) est à proximité du fond (27) du réservoir (10).

4. Dispositif selon la revendication 3,
**caractérisé en ce que**
le canal (40) fait partie du réservoir intermédiaire (14).

5. Dispositif selon l'une des revendications 1 à 4,
**caractérisé en ce qu'**
au moins le réservoir intermédiaire (14) est une pièce en matière plastique injectée.

6. Dispositif selon l'une des revendications 2 à 5,
**caractérisé en ce qu'**
un segment (34) présente une surface de section complètement remplie par le jet d'entraînement (38).
